# EUROPÄISCHE PATENTSCHRIFT

(11) **EP 2 554 314 B1**
(45) Veröffentlichungstag und Bekanntmachung des Hinweises auf die Patenterteilung: **21.12.2016**
(21) Anmeldenummer: 12175237.2
(22) Anmeldetag: 06.07.2012
(51) Int. Cl.: B23D 51/10

(54) **Handgeführte Säge sowie Blattspannmechanismus hierfür**
Handheld saw and blade tensioning mechanism for same
Scies à main et leur mécanisme de tension de lame

(30) Priorität: 04.08.2011 DE 102011080445
(43) Veröffentlichungstag der Anmeldung: 06.02.2013
(73) Patentinhaber: Metabowerke GmbH, 72622 Nürtingen (DE)
(72) Erfinder: Stoll, Michael, 72770 Reutlingen (DE); Seidel, Anja, 73760 Ostfildern (DE); Seyerle, Jörg, 73257 Köngen (DE); Gneiting, Jörg, 72636 Linsenhofen (DE)
(74) Vertreter: Markfort, Iris-Anne Lucie

(56) Entgegenhaltungen:
- EP-A1- 0 544 129
- WO-A1-2007/011542
- DE-A1- 4 311 161
- DE-U1- 20 216 142
- US-A1- 2003 167 641

## Beschreibung

Die vorliegende Erfindung betrifft eine handgeführte Säge gemäß dem Oberbegriff des Anspruchs 1, umfassend einen Blattspannmechanismus, der dazu ausgebildet ist, ein Sägeblatt lösbar an der Säge anzubringen. Eine handgeführte Säge kann beispielsweise eine Säbelsäge oder eine Stichsäge sein.

In der Praxis hat es sich als günstig erwiesen, ein Sägeblatt lösbar an einer solchen handgeführten Säge anzubringen, da dies die Verwendung von Sägeblättern mit unterschiedlichen Schneidkanten erlaubt, was das Schneiden von verschiedenen Materialien ermöglicht. Weiterhin kann durch die lösbare Befestigung von Sägeblättern an einer handgeführten Säge sichergestellt werden, dass abgenutzte oder beschädigte Sägeblätter einfach und schnell durch ein neues Sägeblatt ersetzt werden können. Der Blattspannmechanismus sollte folglich für eine einfache Handhabung und eine schnelle Blattersetzung wie auch für eine sichere Anbringung des Sägeblatts an der handgeführten Säge gestaltet sein.

Aus der Praxis ist neben Blattspannmechanismen mit einem Werkzeug, beispielsweise einem Schraubenschlüssel oder einem speziellen Schlüssel, um das Blatt zu ersetzen und zu befestigen, auch die Befestigung mittels eines werkzeuglosen Blattspannmechanismus bekannt. So offenbart beispielsweise die DE 697 24 935 T2 eine schlüssellose Blattklemme zum schnellen und einfachen Ersetzung und Befestigen eines Sägeblatts an der Spindel einer Säbelsäge. Dieser Klemmmechanismus umfasst ein hülsenförmiges Betätigungselement, das auf dem Ende der Spindel der Säge angebracht ist und in der Lage ist, sich relativ zu der Spindel zwischen einer eingegriffenen Position und einer freigebenden Position zu drehen. Ein einzuspannendes Sägeblatt wird an dem Ende der Spindel in einen Aufnahmeschlitz eingelegt und mit Hilfe eines Verriegelungselements, welches betriebsmäßig zu dem Betätigungselement gehört und ebenfalls relativ zu der Spindel bewegbar ist, eingegriffen, wenn das Betätigungselement in der eingegriffenen Position ist. Wird das Betätigungselement in seine freigebende Position bewegt, so erlaubt es dem Verriegelungselement eine Freigabe des Sägeblatts.

Das Verriegelungselement ist hierbei als Stift ausgebildet, der radial verschiebbar zu der Sägespindel und dem in dem Ende der Spindel aufgenommenen Sägeblatt ist. An seiner Spitze umfasst der Stift einen konischen Abschnitt mit einer Oberfläche, die relativ zu der Oberfläche des übrigen zylinderförmigen Abschnitts des Stifts um ungefähr 45 Grad angewinkelt ist. Weiterhin umfasst der Stift einen Kopfabschnitt, der eine Bewegung des Stifts relativ zu der Spindel nach innen begrenzt. Die Spitze des Stifts greift zur Verriegelung des Sägeblatts in eine entsprechende Ausnehmung an einem Befestigungsabschnitt des Sägeblatts ein. Ist das Befestigungselement in seiner freigegebenen Stellung, so kann der Stift frei nach außen bewegt werden.

Hierzu wird bei einer Auszugsbewegung des Sägeblatts die entlang der konischen Fläche des Stiftes nach radial außen wirkende Kraftkomponente der Auszugskraft genutzt, um das Verriegelungselement nach radial außen zu drängen. Als nachteilig hat sich hierbei jedoch erwiesen, dass sich das Verriegelungselement möglicherweise verklemmen kann und so eine Lösebewegung des Sägeblatts erschwert wird.

Das Betätigungselement ist seinerseits in einem Gehäuse aufgenommen, das dazu ausgebildet ist, sich mit dem Betätigungselement mitzudrehen. Hierzu weist das Gehäuse an seinem Innenumfang zwei Vorsprünge auf, die in entsprechende Ausnehmungen an dem Außenumfang des hülsenförmigen Betätigungselements eingreifen und damit eine Relativbewegung zwischen dem Betätigungselement und dem Gehäuse in radialer Richtung ausschließen.

Weiterhin ist aus dem Stand der Technik, wie in der europäischen Patentschrift EP 0 623 413 B1 offenbart, eine Schnellspannvorrichtung für Stichsägeblätter bekannt, bei der Haltemittel in Form von als Sperrkugeln ausgebildeten Arretierelementen vorgesehen sind, die seitliche Vorsprünge an einem Stichsägeblatt hintergreifen und dadurch das Stichsägeblatt nach unten gegen ein Herausfallen sichern. Eine vergleichbare Anordnung ist auch aus dem Dokument EP 0 544 129 B1 bekannt, das ebenfalls eine Spanneinrichtung für ein Stichsägeblatt offenbart, die die spezielle Geometrie des Befestigungsabschnitts eines Stichsägeblatts mit zwei Vorsprüngen zur Fixierung an einer Stichsäge ausnutzt.

Die US-Patentschrift US 3,823,473 offenbart einen Befestigungsmechanismus zum Befestigung von Sägeblättern einer handgeführten Säge, wobei der Befestigungsmechanismus einen Schaft mit einer Verlängerung umfasst, welche einen Schlitz zum Aufnehmen eines Sägeblatts aufweist. Die Verlängerung mit dem Schlitz wird von einer Hülse umgriffen, die mit Hilfe eines Stifts mit der Verlängerung gekoppelt ist. Die Hülse dient als Betätigungselement, das zwischen einer Verriegelungsstellung und einer Freigabestellung translatorisch hin und her bewegbar ist. An der Verlängerung ist zudem ein stiftförmiges Betätigungselement vorgesehen, das sich mit seinem einen Ende an dem Innenumfang in der Hülse abstützt und mit seinem anderen Ende das in den Schlitz eingeführte Sägeblatt durch Eingriff in eine entsprechende Öffnung an dem Sägeblatt zu fixieren vermag (Wirkstellung). Eine elastische Feder dient dazu, das Verriegelungsglied aus seiner Wirkstellung heraus zurückzustellen, wenn die Betätigungshülse sich relativ hierzu in einer Freigabestellung befindet.

Die deutsche Offenlegungsschrift DE 199 51 040 A1 offenbart eine ähnliche Anordnung für einen Sägeblattbefestigungs- und Lösemechanismus für eine Stichsäge, bei der ebenfalls eine Rückstellfeder ein stiftförmiges Verriegelungsglied aus seiner Wirkstellung herauszustellen vermag. Bei diesem Mechanismus vollführt eine Hülse als Betätigungselement nicht eine translatorische, sondern eine kombinierte translatorische und rotatorische Bewegung.

Die deutsche Gebrauchsmusterschrift DE 202 16 142 U1 offenbart ferner einer Vorrichtung zur Halterung eines Säge- oder Schneidblatts, die in der Art eines Adapters zur Aufnahme eines Säge- oder Schneidwerkzeugs ausgebildet ist. Der Befestigungsabschnitt eines eingesetzten Säge- oder Schneidwerkzeugs (Angel) wird in einen Einsteckschlitz der Vorrichtung eingesteckt und darin formschlüssig gegen ein Herausziehen gesichert. Hierzu weist der Befestigungsabschnitt zwei sich diametral gegenüber gegenüberliegende stufenförmige Vorsprünge auf, die zum Herstellen des Formschlusses von zwei u-förmige Formschlusshaltemitteln hintergriffen werden können. Durch Verdrehen einer außenseitigen Verriegelungsmuffe können die beiden Formschlusshaltemittel nach radial außen verlagert werden, wodurch diese die formschlüssige Verbindung wieder lösen und eine Freigabe des Befestigungsabschnitts des eingelegten Sägeblatts ermöglichen.

Der vorgegebene Einsteckschlitz der Vorrichtung begrenzt dabei die maximale Sägeblattdicke.

Ferner ist aus der US-Patentschrift US 5,443,276 ein Befestigungsmechanismus für ein Sägeblatt bekannt, bei dem unterschiedliche Sägeblätter mit voneinander abweichender Sägeblattdicke befestigt werden können. WO 2007/011541 A offenbart den Oberbegriff des Anspruchs 1.

Somit sind die aus der Praxis bekannten Spannmechanismen für Sägeblätter stets auch auf eine Art von Sägeblättern, beispielsweise auf Sägeblätter für eine Stichsäge oder für eine Säbelsäge bzw. auf Sägeblätter mit einem Befestigungsabschnitt einer Art, beschränkt.

Demgegenüber besteht eine Aufgabe der vorliegenden Erfindung darin, eine zuverlässige Lösbarkeit des Sägeblatts zu gewährleisten und die bekannten Blattspannmechanismen einfacher und für ein breiteres Anwendungsspektrum zu gestalten.

Diese Aufgabe wird durch eine handgeführte Säge mit den Merkmalen des Anspruchs 1 sowie einen Blattspannmechanismus gemäß Anspruch 11 und eine Adaptereinrichtung gemäß Anspruch 12 gelöst.

Die einteilige Ausbildung des Betätigungselements stellt eine Vereinfachung der aus dem Stand der Technik bekannten Konstruktionen dar und stellt sicher, dass eine Betätigungsbewegung des Anwenders eine entsprechende Bewegung des Betätigungselements des Blattspannmechanismus zur Folge hat.

Dadurch dass die Betätigungseinheit ein elastisches Rückstellelement umfasst, welches das Verriegelungsglied aus seiner Eingriffsstellung heraus zurückzustellen vermag, wenn das Betätigungselement sich in seiner Freigabe-Stellung befindet, wird eine zuverlässige Rückstellung des Verriegelungsglieds aus seiner Eingriffsstellung heraus sichergestellt, so dass ein unerwünschtes Blockieren, wie aus dem Stand der Technik bekannt, vermieden werden kann.

Das Verriegelungsglied wird durch eine erste Bewegung des Betätigungselements in dessen Verriegelungsstellung in seine Wirkstellung überführt oder durch eine zweite Bewegung des Betätigungselements in dessen Freigabe-Stellung von dem Rückstellelement aus dieser Wirkstellung heraus verlagert. Die Wirkstellung kann eine Stellung sein, in der das Verriegelungsglied selbst in Eingriff mit dem in dem Aufnahmeabschnitt aufgenommenen Sägeblatt steht (Verriegelungselement wirkt eingreifend) oder in der es das Sägeblatt in Eingriff mit dem Aufnahmeabschnitt hält (Verriegelungselement wirkt haltend oder klemmend).

Die Adaptereinrichtung, die an dem Aufnahmeabschnitt angeordnet ist und wenigstens einen ersten Aufnahmebereich für einen Befestigungsabschnitt eines Sägeblatts mit einer ersten Kontur sowie einen zweiten Aufnahmebereich für einen Befestigungsabschnitt eines Sägeblatts mit einer zweiten Kontur definiert, ermöglicht den Einsatz unterschiedlichster Sägeblätter. Dabei kann es sich bei dem Sägeblatt mit einer ersten Kontur beispielsweise um ein Sägeblatt für eine hin und hergehende Säge, d.h. eine Säbelsäge, handeln, während es sich bei dem Sägeblatt mit einer zweiten Kontur beispielsweise um ein Sägeblatt für eine Stichsäge handeln kann. In diesem Fall weist der Befestigungsabschnitt des Sägeblatts für eine Säbelsäge eine andere Kontur auf, als der Befestigungsabschnitt des Sägeblatts für eine Stichsäge.

Alternativ kann ein Sägeblatt mit einer ersten Kontur aber auch unabhängig von seiner geeigneten Verwendung für einen bestimmten Sägetyp einen anders konturierten Sägeblattschaft aufweisen als ein Sägeblatt mit einer zweiten Kontur. So unterscheiden sich die Befestigungsabschnitte von Sägeblättern nicht notwendigerweise aufgrund ihrer Eignung für unterschiedliche Sägearten, sondern auch abhängig von der Eignung zur Verwendung in Sägen unterschiedlicher Hersteller. Bekannte Konturformen für den Befestigungsabschnitt von Sägeblättern für Stichsägen sind beispielsweise der T-förmige Einnockenschaft, der zwei Vorsprünge aufweist, die senkrecht bezüglich der Längsachse des Sägeblatts vorstehen und hintergriffen werden können (vgl. Ausführungen zu der EP 0 623 413 B1), der U-Schaft mit einer U-förmigen Ausnehmung an seinem axialen Endabschnitt, der Feinschaft ohne jegliche Ausnehmung, Hinterschneidung oder Vorsprünge und der sogenannte Makita-Schaft mit zwei Ausnehmungen.

Selbstverständlich kann die Adaptereinrichtung zusätzlich oder alternativ Aufnahmebereiche für die Aufnahme von Befestigungsabschnitten eines Sägeblatts für Sägen mit einer anderen von der ersten und zweiten Kontur abweichenden Kontur aufweisen.

Mithilfe einer solchen Adaptereinrichtungen können folglich sowohl Sägeblätter mit Eignung für unterschiedliche Sägearten als auch mit Eignung für Sägen unterschiedlicher Hersteller an einer erfindungsgemäßen Säge angebracht werden. Hierdurch wird der Anwendungsbereich der erfindungsgemäßen Säge maßgeblich gegenüber dem Stand der Technik erweitert.

Ferner kann das Betätigungselement einteilig ausgebildet sein und wenigstens eine Greiffläche aufweisen, an der ein Anwender das Betätigungselement greifen kann, um dieses relativ zu dem Aufnahmeabschnitt zu bewegen.

Das elastische Rückstellelement kann eine Feder umfassen, welche an dem Verriegelungsglied anzugreifen vermag. Alternativ ist jedoch auch eine Ausbildung des elastische Rückstellelements in der Art eines gummielastischen Rückstellelements, beispielsweise in der Form eines Gummirings oder dergleichen, denkbar.

Weiterhin kann das Betätigungselement aus einem metallischen Werkstoff hergestellt sein und die wenigstens eine Greiffläche eine Strukturierung in der Art einer Rändelung, Riffelung oder dergleichen aufweisen. Die Herstellung aus einem metallischen Werkstoff stellt sicher, dass unabhängig von der Größe der angreifenden Betätigungskräfte durch den Anwender das Betätigungselement formstabil bleibt. Zudem wird durch die Strukturierung der Greiffläche eine verbesserte Greifbarkeit erreicht, da die Haftreibung zwischen der Hand des Anwenders und des Betätigungselements dadurch erhöht wird.

Weiterhin kann vorgesehen sein, dass die Adaptereinrichtung eine Auflageplatte umfasst, wobei ein Befestigungsabschnitt mit einer ersten Kontur auf einer Auflageseite der Adapterplatte aufliegen kann und wobei die Auflageseite ferner eine nutartige Vertiefung aufweist, in die ein Befestigungsabschnittmit einer zweiten Kontur eingelegt werden kann. Ferner kann die Kontur der nutartigen Vertiefung zumindest abschnittsweise im wesentlichen der zweiten Kontur eines Befestigungsabschnitts entsprechen. Grundsätzlich kann die nutartige Vertiefung auch mehrere Konturabschnitte umfassen, die jeweils zumindest abschnittsweise im wesentlichen der Kontur eines Sägeblatt-Befestigungsabschnitts ent entsprechen, wobei die Konturabschnitte nebeneinander angeordnet sein können und/oder sich teilweise überlappen können.

Alternativ oder zusätzlich zu einer Gestaltung mit einer nutartigen Vertiefung ist es jedoch ebenfalls denkbar, einzelne Vorsprünge vorzusehen, die wenigstens abschnittsweise im wesentlichen mit der Kontur des Befestigungsabschnitts eines Sägeblatts übereinstimmen.

Die Auflageplatte kann ferner zumindest teilweise in dem Aufnahmeabschnitt aufgenommen sein und mittels wenigstens eines Befestigungsmittels an diesem befestigt sein.

Hierzu kann der Aufnahmeabschnitt wenigstens ein korrespondierendes Befestigungsmittel aufweisen, welches mit dem wenigstens einen Befestigungsmittel zur Befestigung der Auflageplatte zusammenwirkt. Beispielsweise kann vorgesehen sein, dass der Aufnahmeabschnitt als korrespondierendes Befestigungsmittel eine Ausnehmung aufweist, in die ein als Stift oder dergleichen ausgebildete Befestigungsmittel eingreifen kann. Besonders günstig ist das Befestigungselements hülsenförmig, beispielsweise als Spreizhülse ausgebildet.

Andere Alternativen, beispielsweise dass ein korrespondierendes Befestigungsmittel als integral ausgebildetes Befestigungsmittel an dem Aufnahmeabschnitt ausgebildet ist, sind ebenfalls denkbar.

Schließlich kann vorgesehen sein, dass die Säge eine mittels einer Antriebseinheit angetriebene Spindel umfasst, welche mit dem Aufnahmeabschnitt verbindbar ausgebildet ist. Selbstverständlich kann in einer alternativen Ausgestaltungsform die angetriebene Spindel der Säge selbst an ihrem Ende den Aufnahmeabschnitt aufweisen, an dem das Sägeblatt angebracht wird.

Ferner betrifft die Erfindung einen Blattspannmechanismus für eine handgeführte Säge mit den vorstehend genannten Merkmalen sowie eine Adaptereinrichtung für einen Blattspannmechanismus mit den vorstehend genannten Merkmalen.

Die vorliegende Erfindung wird nachfolgend unter Bezugnahme auf die beigefügten Figuren detaillierter beschrieben, wobei die Figuren eine bevorzugte Ausführungsform darstellen. Der Fachmann wird die in den Figuren dargestellten, in der Beschreibung und den Ansprüchen in Kombination miteinander offenbarten Merkmale zweckmäßigerweise auch einzeln betrachten und zu sinnvollen weiteren Kombinationen zusammenfassen.

Es zeigen schematisch dargestellt:
- Figur 1: eine Explosionszeichnung eines erfindungsgemäßen Blattspannmechanismus einer handgeführten Säge in perspektivischer Ansicht;
- Figuren 2a und 2b: einen Querschnitt durch den erfindungsgemäßen Blattspannmechanismus der Figur 1, wobei in den Figuren 2a und 2b das Verriegelungselement in seiner Wirkstellung bzw. aus seiner Wirkstellung herausbewegt gezeigt ist;
- Figur 3: einen Querschnitt durch den erfindungsgemäßen Blattspannmechanismus der Figur 1, wobei ein Sägeblatt einer anderen Art in den Blattspannmechanismus eingelegt ist und das Verriegelungselement in seiner Wirkstellung gezeigt ist;
- Figuren 4a und 4b: einen Längsschnitt durch den erfindungsgemäßen Blattspannmechanismus der Figur 3 entlang der Linie IV-IV der Figur 3, wobei in den Figuren 4a und 4b das Verriegelungselement in seiner Wirkstellung bzw. aus seiner Wirkstellung herausbewegt gezeigt ist;
- Figur 5: einen Längsschnitt durch den Blattspannmechanismus der Figur 3 entlang der Linie V-V der Figur 3;
- Figur 6: die Adapterplatte der erfindungsgemäßen Adaptereinrichtung in perspektivischer Darstellung;
- Figur 7: das Verriegelungselement des erfindungsgemäßen Blattspannmechanismus der Figur 1 in perspektivischer Darstellung; und
- Figur 8: die Aufnahmehülse der erfindungsgemäßen Adaptereinrichtung in perspektivischer Darstellung.

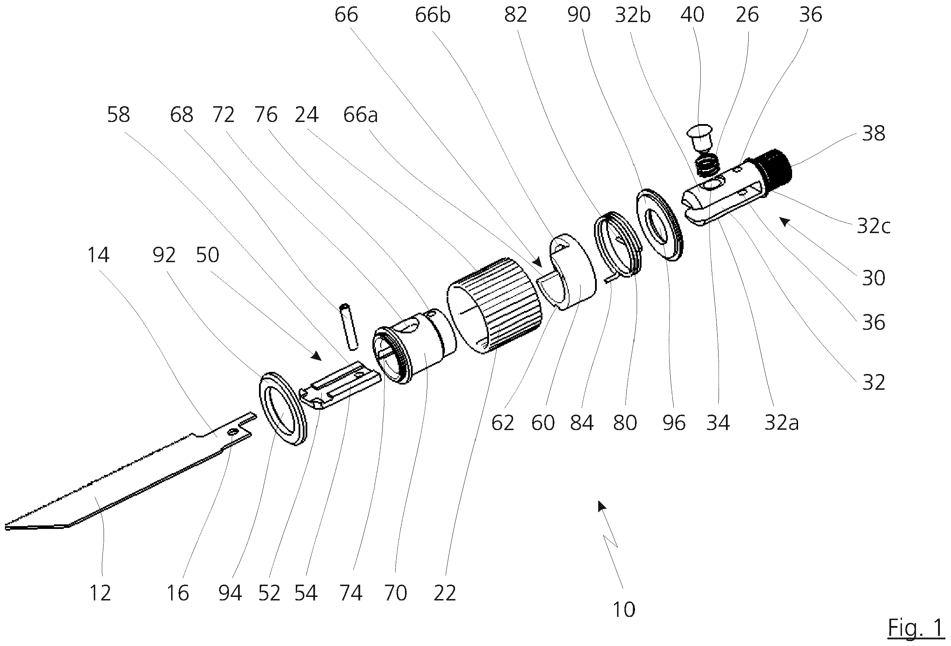

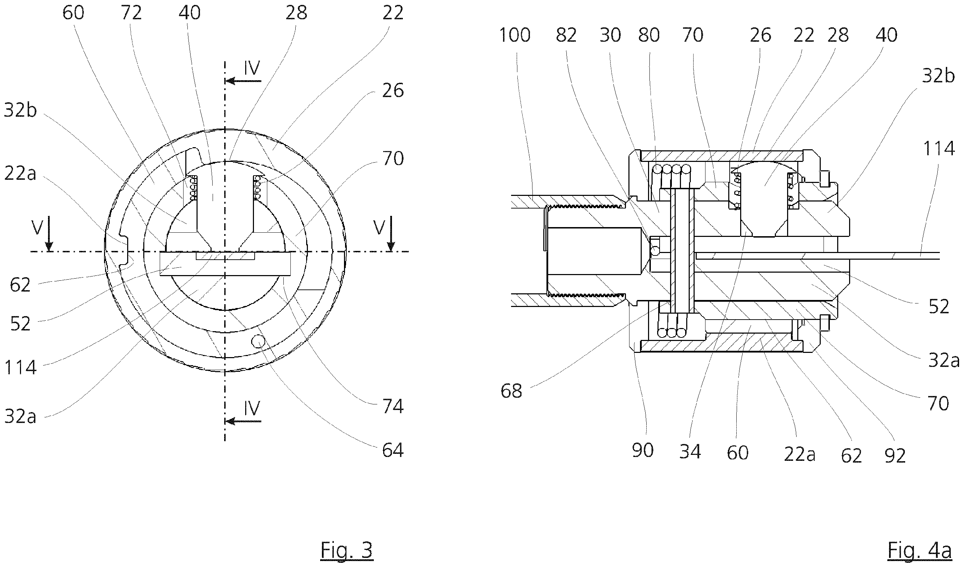

Die Figur 1 zeigt einen erfindungsgemäßen Blattspannmechanismus für eine handgeführte Säge, wobei der Blattspannmechanismus allgemein mit dem Bezugszeichen 10 versehen ist. Die erfindungsgemäße handgeführte Säge ist der Einfachheit halber nicht im Ganzen gezeigt, sondern in den Figuren 4a bis 5 durch ihre Spindel 100 dargestellt.

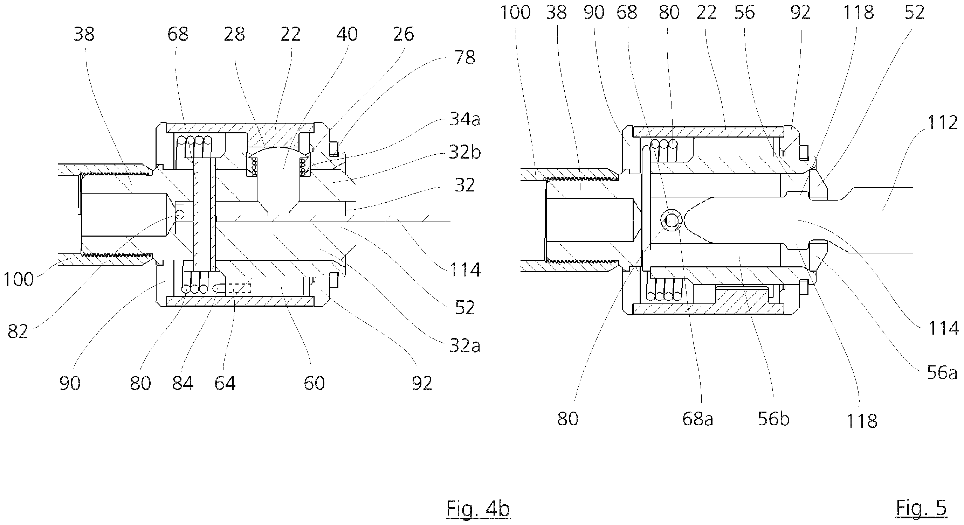

Der Blattspannmechanismus 10 dient in der gezeigten Ausführungsform zum Einspannen eines Sägeblatts 12 für eine Säbelsäge (Figuren 1 bis 2b) bzw. zum Einspannen eines Sägeblatts 112 für eine Stichsäge (Figuren 3 bis 5). Jedes Sägeblatt, egal ob es sich dabei um ein Säbelsägeblatt 12 oder ein Stichsägeblatt 112 handelt, weist einen Befestigungsabschnitt (Sägeblattschaft) 14 bzw. 114 auf, der in dem erfindungsgemäßen Blattspannmechanismus 10 aufgenommen werden kann. Je nach Art des Sägeblatts ist der Sägeblattschaft jedoch anders ausgebildet. So umfasst der Befestigungsabschnitt 14 des gezeigten Säbelsägeblatts 12, (vgl. Figur 1) eine im Wesentlichen L-förmige Kontur mit einer Ausnehmung 16. Der Sägeblattschaft 114 des Stichsägeblatts 112 (vgl. Figur 5, in einer Draufsicht gezeigt) umfasst eine im Wesentlichen T-förmige Kontur (sogenannter Einnockenschaft) ohne Ausnehmung. Anstelle einer Ausnehmung sind zwei Vorsprünge 118 vorgesehen, die zur axialen Befestigung des Stichsägeblatts 112 dienen können. Der Begriff axial wird nachfolgend bezogen auf die nicht-dargestellte Längsachse der Spindel 100 der Säge verwendet.

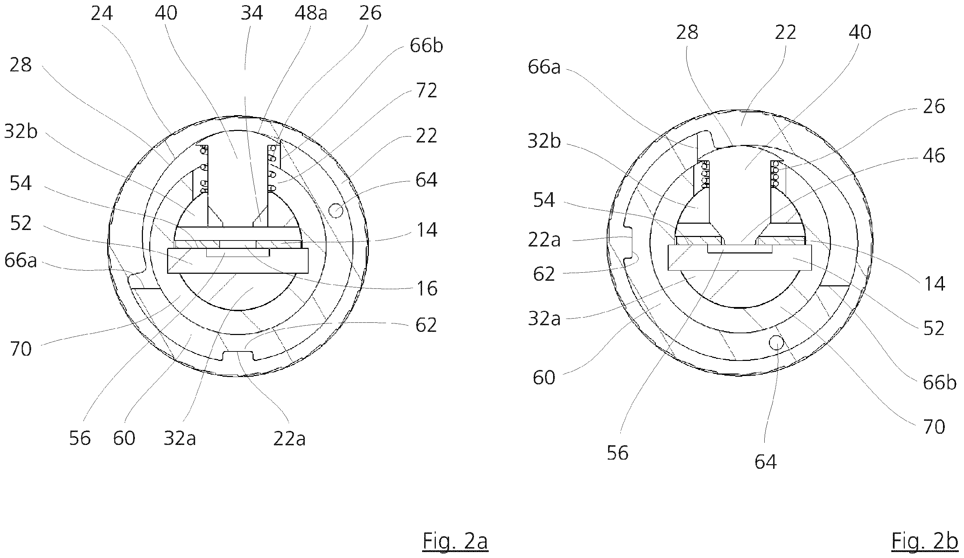

Der Blattspannmechanismus 10 umfasst, wie in Figur 1 deutlich gezeigt, eine Reihe von Bauteilen, die gemeinsam den Blattspannmechanismus bilden. Von außen nach innen betrachtet (vgl. auch Figuren 2a bis 3 im Querschnitt bzw. 4a bis 5 im Längsschnitt), umgreift das hülsenförmige Betätigungselement 22 den Blattspannmechanismus 10 weitestgehend. An der Außenumfangsfläche des Betätigungselements 22 ist eine Riffelung oder Rändelung, d. h. eine strukturierte Oberfläche 24 vorgesehen, die das Greifen und Betätigen des Betätigungselements 22 durch die Hand eines Anwenders erleichtern soll.

An seiner Innenumfangsfläche weist das Betätigungselement 22 eine Nockenfläche 28 (vgl. Figuren 2a und 2b) auf, die ein stiftförmiges Verriegelungsglied 40 an dessen Kopfoberseite 48a kontaktiert. Somit bewirkt eine relative Verdrehung des Betätigungselements 22 gegenüber dem Verriegelungsglied 40 eine Bewegung des Verriegelungsglieds 40 von radial außen nach radial innen (radial bezogen auf eine nicht dargestellte Längsachse der Spindel 100 der Säge).

Des Weiteren umfasst das Betätigungselement 22 an seiner Innenumfangsfläche einen Vorsprung 22a (vgl. Figuren 2a und 2b), der eine drehfeste Verbindung mit einem Federaufnahmeglied 60 ermöglicht. Hierzu weist das Federaufnahmeglied 60 seinerseits eine korrespondierende Vertiefung 62 auf, in der der Vorsprung 22a im montierten Zustand (vgl. Figuren 2a bis 5) aufgenommen ist.

Das Federaufnahmeglied 60 ist hülsenförmig aufgebaut und weist mit Ausnahme des Bereichs mit der Ausnehmung 62 eine gleichbleibende Wandstärke auf. Wie in der Figur 1 deutlich zu erkennen, ist an dem Federaufnahmeglied 60 über einen Winkel von etwa 90 Grad eine Aussparung 66 vorgesehen, durch die sich das Verriegelungsglied 40 wie auch eine zugehörige Feder 26 erstrecken können. Die beiden seitlichen Anschlagflächen 66a und 66b (vgl. Figuren 2a und 2b) des Federaufnahmeglieds 60 dienen als die Verdrehung bzw. Verdrehbewegung des Betätigungselements 22 begrenzende Anschläge. Demgemäß ist auch der Bereich der als Steuerfläche wirkenden Nockenfläche 28 auf einen Winkel von etwa 90 Grad beschränkt. Selbstverständlich kann es alternativ günstig sein, einen größeren oder kleineren Verdrehwinkel zum Verstellen des Betätigungselements aus seiner Verriegelungsstellung in seine Freigabe-Stellung vorzusehen. In diesem Fall müssten sowohl der Winkelbereich der Aussparung 66 als auch der Bereich, über den sich die als Steuerfläche wirkende Nockenfläche 28 erstreckt, angepasst werden.

In Figur 2a ist eine entriegelte Stellung des Blattspannmechanismus 10 gezeigt, in der das Betätigungselement 22 in seiner Freigabe-Stellung angeordnet ist. In dieser Stellung dient die Anschlagfläche 66b als begrenzender Anschlag für die Drehbewegung des Betätigungselements 22 gegenüber dem Verriegelungsglied 40, indem diese an dem Kopfabschnitt 48 des Verriegelungsglieds 40 anliegt. In der Figur 2b ist dagegen die Verriegelungsstellung des Blattspannmechanismus 10 gezeigt, in der das Betätigungselement 22 sich in seiner Verriegelungsstellung befindet und das Verriegelungsglied 40 in Wirkverbindung mit dem Befestigungsabschnitt 14 des Sägeblatts 12 steht. In dieser Stellung begrenzt die Anschlagfläche 66a die Drehbewegung des Betätigungselements 22 gegenüber dem Verriegelungsglied 40, indem diese an dem Kopfabschnitt 48 des Verriegelungsglieds 40 anliegt.

Weiterhin umfasst der Blattspannmechanismus 10, wie in Figur 1 zu erkennen ist, eine Drehfeder 80, deren erstes Ende 82 in oder an einem relativ zu dem festzuspannenden Sägeblatt feststehenden Element bzw. Bauteil des Blattspannmechanismus 10 aufgenommen ist (in der gezeigten Ausführungsform in dem Schlitz 32 des Blattaufnahmeabschnitts 30), während ihr zweites Ende 84 in einer Öffnung 64 (vgl. Figuren 2a und 2b) des Federaufnahmeglieds 60 aufgenommen ist. Wird somit das Betätigungselement 22 relativ zu dem Aufnahmeabschnitt 30 verdreht, so nimmt das Betätigungselement 22 über seinen Vorsprung 22a das Federaufnahmeglied 60 sowie das damit verbundene zweite Federende 84 in Richtung der Drehung mit. Dadurch wird die Feder 80 vorgespannt und speichert eine Rückstellkraft, welche dann, wenn der Anwender das Betätigungselement 22 loslässt, eine Rückstellbewegung des Federaufnahmeglieds 60 und des damit verbundenen Betätigungselements 22 in deren jeweilige Ausgangsstellung veranlasst. Als Ausgangsstellung ist in der vorliegenden Ausführungsform die Verriegelungsstellung des Betätigungselements 22 definiert. Auf diese Weise kann gewährleistet werden, dass nur dann, wenn der Anwender dies wünscht und aktiv das Betätigungselement betätigt, das Sägeblatt entriegelt wird. Eine Umkehrung, d. h. dass die Ausgangsstellung die Freigabestellung des Betätigungselements 22 darstellt, kann jedoch gegebenenfalls auch vorgesehen werden.

Weiterhin umfasst der Blattspannmechanismus 10, wie bereits vorstehend erwähnt, einen Aufnahmeabschnitt 30, in dem das Sägeblatt 12 bzw. 112 mit seinem Befestigungsabschnitt 14 bzw. 114 aufgenommen werden kann. Der Aufnahmeabschnitt 30 umfasst zwei Längsschenkel 32a, 32b, die zwischen sich einen Aufnahmeschlitz 32 ausbilden und an einer Kante 32c zusammenlaufen, welche den Aufnahmeschlitz 32 in Längsrichtung begrenzt. Anstelle eines Aufnahmeschlitzes 32 kann jedoch auch eine Aufnahmeöffnung zwischen diesen vorgesehen sein. Der Schlitz 32 ermöglicht in der dargestellten Ausführungsform eine möglichst kompakte Bauweise.

Der Aufnahmeabschnitt 30 ist in der dargestellten Ausführungsform als separates Element ausgebildet, das mit Hilfe eines Verbindungsabschnitts 38 mit einer Spindel 100 einer erfindungsgemäßen handgeführten Säge verbindbar ist (vgl. Figuren 4a bis 5). Alternativ ist es selbstverständlich ebenfalls denkbar, den Aufnahmeabschnitt 30 direkt an dem freien Ende einer Spindel einer handgeführten Säge auszubilden.

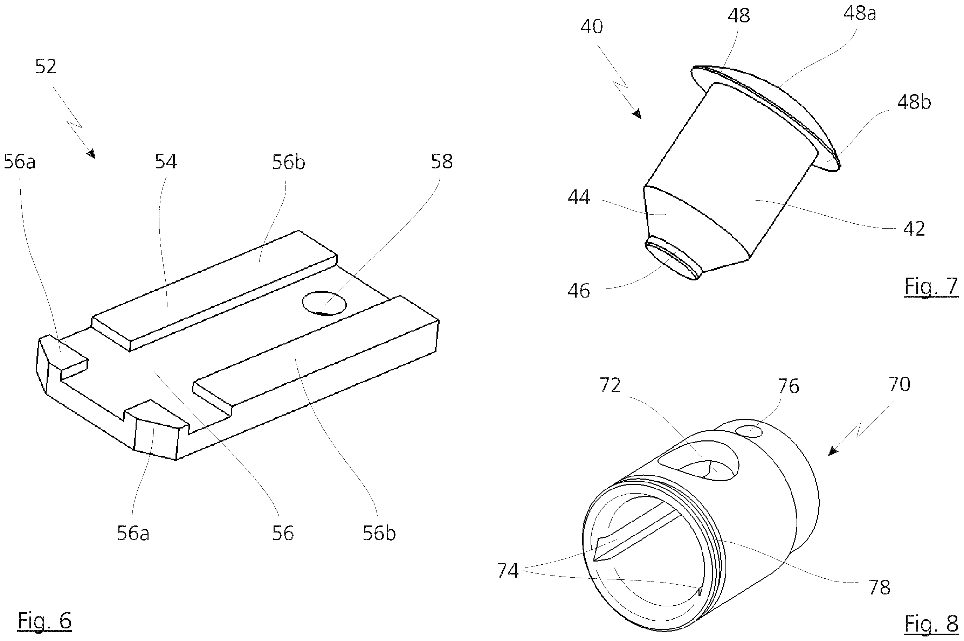

An dem Aufnahmeabschnitt 30 ist im Bereich des (in den Figuren) oberen Schenkels 32b eine Ausnehmung 34 vorgesehen, die eine Aufnahme des Verriegelungsglieds 40 ermöglicht. Wie in den Figuren 2a bis 4b deutlich zu erkennen ist, entspricht die Ausnehmung in ihrer Kontur im Wesentlichen der Außenkontur des zylinderförmigen Abschnitts 42 (vgl. Figur 7) des stiftförmigen Verriegelungsglieds 40. Eine zusätzliche Fase 34a (vgl. Figur 4b) erleichtert zudem die zentrierte Anlage der Feder 26 an der Außenumfangsfläche des oberen Schenkels 32b. Die maximale Eindringtiefe des Verbindungsglieds 40 wird somit durch die Länge der zusammengedrückten Feder 26 begrenzt.

Ferner sind an beiden Schenkeln 32a und 32b des Aufnahmeabschnitts 30 miteinander fluchtende Ausnehmungen 36 vorgesehen, die (wie beispielsweise in den Figuren 4a bis 5 gezeigt) zur Aufnahme eines Befestigungsstifts oder einer Befestigungshülse dienen. Wie in der Figur 5 zu erkennen ist, handelt es sich bei dem in den Figuren gezeigten Bauteil zur Befestigung 68 um eine Spreizhülse mit einem Längsspalt 68a. Diese dient zur Fixierung einer Adapterplatte 52 in dem Schlitz 32 des Aufnahmeabschnitts 30.

Eine Besonderheit der vorliegenden Erfindung ist darin zu sehen, dass das Verriegelungsglied 40 bei einer Bewegung in beiden Bewegungsrichtungen, d. h. sowohl bei einer Bewegung aus seiner Wirkstellung, in der es in Wirkverbindung mit einem zu spannenden Sägeblatt steht, heraus als auch bei einer Bewegung in seine Wirkstellung stets zwangsgeführt ist. So wirkt, wie bereits vorstehend beschrieben, die Nockenfläche 28 an der Innenumfangsfläche des Betätigungselements 22 auf die Kopfoberseite 48a des Verriegelungsglieds 40 und verlagert dieses bei einer entsprechenden Drehbewegung des Betätigungselements 22 in seine Wirkstellung. Des Weiteren dient jedoch auch das Federelement 26 dazu, das Verriegelungsglied 40 zwangszuführen, nämlich aus seiner Wirkstellung heraus. So wird die Feder 26 bei einer Verlagerung des Verriegelungsglieds 40 in seine Wirkstellung zusammengedrückt (vgl. Figur 2b) und speichert dabei eine Rückstellkraft. Die Rückstellkraft stellt dann, wenn das Betätigungselement 22 in seine Freigabe-Stellung zurückbewegt wird, in der es eine Rückstellung des Verriegelungsglieds 40 aus der Wirkstellung heraus erlaubt, dieses aus der Wirkstellung heraus zurück (vgl. Figur 2a).

Wie in den Figuren, insbesondere in Figur 7, deutlich zu erkennen ist, umfasst das Verriegelungsglied 40 neben einem zylindrischen Abschnitt 42 auch einen Kopfabschnitt 48, der gegenüber dem zylindrischen Abschnitt 42 eine Absatzfläche 48b ausbildet. An dieser Absatzfläche 48b liegt die Feder 26 mit ihrem einen Ende an, während das andere Ende, wie bereits vorstehend ausgeführt, an der Außenumfangsfläche des oberen Schenkels 32b des Aufnahmeabschnitts 30 aufliegt (vgl. Figuren 2a und 2b). Die Kopfoberseite 48a des Kopfabschnitts 48 ist sphärisch gekrümmt, so dass zwischen der Nockenfläche 28 und der Kopfoberseite 48a in jeder Winkelstellung des Betätigungselements 22 relativ zu dem Verriegelungselement 40 ein Punktkontakt besteht. Zudem wird hierdurch eine möglichst reibungsarme Verdrehung der Nockenfläche 28 relativ zu dem Verriegelungselement 40 ermöglicht.

Der zylinderförmige Abschnitt 42 des Verriegelungsglieds 40 ist in jeder Stellung des Verriegelungsglieds 40 wenigstens teilweise von der Rückstellfeder 26 umgeben. Somit dient dieser zylinderförmige Abschnitt 42 unter anderem zur Stabilisierung der Rückstellfeder 26 und verhindert ein Ausknicken oder Umknicken der Feder 26, wenn diese vorgespannt wird.

Eine weitere Besonderheit der vorliegenden Erfindung wird durch eine zusätzliche Adaptereinrichtung 50 an dem Aufnahmeabschnitt 30 gebildet. Diese umfasst die Adapterplatte 52, welche in einer Aufnahmehülse 70 aufgenommen und drehfest befestigt ist. Die Aufnahmehülse 70 umgibt die Außenumfangsfläche der Schenkel 32a und 32b des Aufnahmeabschnitts 30 und weist zu den Aufnahmeöffnungen 34 bzw. 36 korrespondierende Aufnahmeöffnungen 72 und 76 auf (vgl. zum Beispiel Figuren 2a und 4a). Im Unterschied zu der Aufnahmeöffnung 34, die nur das Verriegelungsglied 40, nicht jedoch die Feder 26 aufnehmen soll, ist die Aufnahmeöffnung 72 der Aufnahmehülse 70 jedoch derart gestaltet, dass die Feder 26 ebenfalls in diese aufgenommen werden kann.

An ihrem Innenumfang weist die Aufnahmehülse 70, wie insbesondere in der Figur 8 deutlich zu erkennen ist, zwei Nuten 74 auf, die in ihrer Kontur den Eckkanten der aufzunehmenden Adapterplatte 52 entsprechen (vgl. Figuren 2a bis 3). Durch die spezielle Form der Nuten 74 dienen diese als Leitschienen für die eingeschobene Adapterplatt 52 und verhindern eine Bewegung der Adapterplatte 52 in einer anderen Richtung als entlang der Nuten 74. Die zusätzliche Spreizhülse 68 dient letztlich der axialen Sicherung der Adapterplatte 52 in der Aufnahmehülse 70. Hierzu weist auch die Adapterplatte 52 eine im montierten Zustand mit den Ausnehmungen 36 und 76 fluchtende Durchgangsbohrung 58 auf, durch die sich die eingesetzte Spreizhülse 68 erstrecken kann.

Nachfolgend soll die Funktionsweise des Blattspannmechanismus 10 für eine erfindungsgemäße Säge beschrieben werden. Dabei wird zuerst unter Bezugnahme auf die Figuren 2a und 2b das Einspannen eines Sägeblatts 12 für eine Säbelsäge beschrieben und danach unter Bezugnahme auf die Figuren 3 bis 5 wird das Einspannen eines Sägeblatts 112 für eine Stichsäge beschrieben.

Wie in der Figur 1 sowie den Figuren 2a und 2b ersichtlich, ist an dem Sägeblattschaft 14 des Säbelsägeblatts 12 eine Ausnehmung 16 vorgesehen, in die das Verriegelungsglieds 40 mit einem zylinderförmigen Abschnitt 46 (vgl. Figur 7) eingreifen kann. Dabei ist der zylinderförmige Abschnitt 46 des Verriegelungsglieds 40 bezüglich seines Durchmessers kleiner als die Ausnehmung 16 dimensioniert und geht in einen konischen Übergangsabschnitt 44 über, der den zylinderförmigen Abschnitt 42 mit der zylinderförmigen Spitze 46 verbindet. Der konische Abschnitt 44 dient zur zentrierten Anlage in der Ausnehmung 16 des Sägeblattschafts 14 des Säbelsägeblatts 12 (vgl. Figur 2b). Das Säbelsägeblatt 12 wird auf die Anlagefläche 54 der Adapterplatte 52 aufgelegt.

Für die axiale Festlegung, d. h. die Einschiebtiefe des Sägeblatts 12, kann ein separater Anschlag genutzt werden, alternativ ist es jedoch auch denkbar, dass die ohnehin vorgesehene Spreizhülse 68 oder die den Schlitz 32 begrenzende Seitenkante 32c genutzt wird. Will der Anwender ein eingelegtes Säbelsägeblatt 12 durch ein anderes Sägeblatt ersetzen, so muss er zuerst das Betätigungselement 22 relativ zu dem Aufnahmeabschnitt 30 verdrehen, wodurch das Verriegelungsglied 40 in eine Stellung gebracht wird, in der es keinerlei Wirkverbindung mit einem eingelegten Sägeblatt eingehen kann. Das eingelegte Sägeblatt kann nun aus dem Aufnahmeabschnitt 30 herausgezogen werden und durch ein anderes ersetzt werden. In einem weiteren Schritt wird ein anderes Sägeblatt, wie gewünscht, in den Aufnahmeabschnitt 30 eingeschoben, bis es in axialer Richtung die gewünschte Stellung erreicht hat. Nun kann der Anwender das Betätigungselement 22 loslassen, welches mit Hilfe der Rückstellkraft der Rückstellfeder 18 in seine verriegelnde Stellung zurückgeführt wird, in der es das Verriegelungsglied 14 nach radial innen verlagert. Dieses greift nun mit seiner zylinderförmigen Spitze 46 in die Ausnehmung 16 des Sägeblatts 12 ein und verhindert auf diese Weise ein Herausfallen des Sägeblatts 12 bzw. eine Bewegung des Sägeblatts 12 in axialer Richtung.

Im Unterschied hierzu ist, wie in den Figuren 3 bis 5 gezeigt, an dem Befestigungsabschnitt bzw. Sägeblattschaft 114 eines Sägeblatts 112 für eine Stichsäge keine Ausnehmung vorgesehen, in die die zylinderförmige Spitze 46 des Verriegelungsglieds 40 eingreifen könnte. Stattdessen ist an der Anlageseite bzw. Anlagefläche 54 der Adapterplatte 52 eine kreuzförmige Nut 56 vorgesehen, die in ihrer Kontur im Wesentlichen der Außenkontur des Sägeblattschafts 114 des Stichsägeblatts 112 entspricht. Dabei begrenzen die vorderen Vorsprünge 56a die kreuzförmige Nut 56 ebenso wie die hinteren Vorsprünge 56b. Ist das Sägeblatt 112 mit seinem Sägeblattschaft 114 in die Nut 56 der Adapterplatte 52 eingelegt, so drückt das Verriegelungsglied 40 mit seiner zylinderförmigen Spitze 46 in seiner Wirkstellung auf das Sägeblatt 112 und verhindert auf diese Weise, dass dieses in axialer Richtung über die vorderen Vorsprünge 56a oder die hinteren Vorsprünge 56b hinaus mit seinen vorspringenden Flanken 118 bewegt werden kann. Auf diese Weise wird ebenfalls eine axiale Fixierung und damit ein Spannen des Sägeblatts 112 mit Hilfe des erfindungsgemäßen Blattspannmechanismus 10 erreicht.

Nachfolgend soll kurz die Montage eines erfindungsgemäßen Blattspannmechanismus 10 erläutert werden: In einem ersten Schritt wird eine hintere Abdeckplatte 90 auf den Aufnahmeabschnitt 30 aufgefädelt. Diese soll zusammen mit einer vorderen Abdeckplatte 92 sowie mit dem Betätigungselement 22 den Blattspannmechanismus nach außen hin im wesentlichen abschließen und so das Risiko einer Verletzung durch einzelne Bauelemente für den Anwender zu verringern. Hierauf wird die Aufnahmehülse 70 auf den Aufnahmeabschnitt 30 aufgefädelt und in einem weiteren Schritt wird dann die Adapterplatte 52 in die Aufnahmehülse eingeschoben. Der Aufnahmeabschnitt 30, die Aufnahmehülse 70 und die Adapterplatte 52 können dann mit Hilfe der Spannhülse 68 relativ zueinander fixiert werden, indem die Spannhülse 68 in den Aufnahmeöffnungen 36, 76 und 38 aufgenommen wird. Danach wird die Drehfeder 80 zusammen mit dem Federaufnahmeglied 60 auf die Aufnahmehülse 70 aufgefädelt, wobei das zweite Ende 84 der Drehfeder 80 in der entsprechenden Öffnung 64 des Federaufnahmeglieds aufgenommen sein kann. Das erste Ende 82 der Drehfeder 80 erstreckt sich hingegen in Schlitz 32. Hierbei ist zu berücksichtigen, dass entweder das erste Ende 82 der Drehfeder 80 manuell in den Bereich zwischen der Hinterkante 32c des Schlitzes 32 und der Spreizhülse 68 eingefädelt wird oder, was günstiger ist, die Spreizhülse 68 erst dann eingesetzt wird, wenn bereits die Drehfeder 80 zusammen mit dem Federaufnahmeglied 60 auf der Aufnahmehülse 70 aufgefädelt ist.

Nun können das Verriegelungsglied 40 und die zugehörige Rückstellfeder 26 eingesetzt werden, wobei das Verriegelungsglied 40 sich durch die Feder 26 hindurch erstreckt und in die fluchtenden Aufnahmeöffnungen 72 und 34 eingesetzt wird. Schließlich wird das hülsenförmige Betätigungselement 22 auf diese Anordnung aufgesetzt, wobei der Vorsprung 22a, welcher in die Ausnehmung 62 des Federaufnahmeglieds 60 eingreifen soll, auch als Montageorientierung dient, damit die Nockenfläche 28 relativ zu dem Verriegelungsglied 40 an der korrekten Position angebracht ist. Zum Abschluss wird die Abdeckplatte 92 an der Aufnahmehülse 70 an deren Halte-Abschnitt 78 angebracht, so dass die Abschlussplatten 90 und 92 zusammen mit dem Betätigungselement 22 ein zylinderförmiges Gehäuse mit einer vorderen Ausnehmung 94 zum Einsetzen des Sägeblatts sowie einer hinteren Ausnehmung 96 für den Verbindungsabschnitt 38 zur Verbindung mit der Spindel 100 bilden.

Wie bereits eingangs ausgeführt, kann der Aufnahmeabschnitt 30 einteilig mit der Spindel 100 an einer erfindungsgemäßen Säge ausgebildet sein oder alternativ mit dieser verbindbar sein. Bei dem dargestellten Ausführungsbeispiel wird eine Verbindung über ein an dem Abschnitt 38 ausgebildetes Außengewinde erzielt, das in ein korrespondierendes Innengewinde an der Spindel 100 eingreift. Alternativ sind jedoch auch andere Verbindungsverfahren, lösbar oder nicht lösbar, zur Verbindung von dem Aufnahmeabschnitt 30 und der Spindel 100 denkbar.

Mit Hilfe der erfindungsgemäßen Adaptereinrichtung 50 ist es möglich, den erfindungsgemäßen Blattspannmechanismus 10 für unterschiedliche Arten von Sägeblättern, in dem dargestellten Beispiel sowohl für Stichsägeblätter 112 als auch Säbelsägeblätter 12, einzusetzen. Ferner wird durch die richtungsunabhängige Zwangsführung des Verriegelungsglieds 40 sichergestellt, dass ein Blockieren in der Wirkstellung oder außerhalb der Wirkstellung vermieden wird.

## Patentansprüche

1. Handgeführte Säge umfassend einen Blattspannmechanismus (10), der dazu ausgebildet ist, ein Sägeblatt (12; 112) lösbar an der Säge anzubringen, wobei der Blattspannmechanismus (10) aufweist:
- einen Aufnahmeabschnitt (30) zur Aufnahme und Verbindung des Sägeblatts (12; 112) mit der Säge,
- eine Betätigungseinheit (20) mit einem Betätigungselement (22), das im Bereich des Aufnahmeabschnitts (30) angeordnet ist und relativ zu dem Aufnahmeabschnitt (30) zwischen einer Freigabe-Stellung und einer Verriegelungsstellung bewegbar ist, und
- ein Verriegelungsglied (40), das in Folge einer Bewegung des Betätigungselements (22) aus seiner FreigabeStellung in seine Verriegelungsstellung in eine Wirkstellung bewegt wird, in der das Verriegelungsglied (40) in Wirkverbindung mit einem in dem Aufnahmeabschnitt (30) aufgenommenen Sägeblatt (12) steht,
wobei eine Bewegung des Betätigungselements (22) aus seiner Verriegelungsstellung in seine Freigabe-Stellung eine Rückstellung des Verriegelungsglieds (40) aus der Wirkstellung heraus erlaubt,
und wobei die Betätigungseinheit (20) ferner ein elastisches Rückstellelement (26) umfasst, welches das Verriegelungsglied (40) aus der Wirkstellung heraus zurückzustellen vermag, wenn das Betätigungselement (22) sich in seiner Freigabe-Stellung befindet,
**dadurch gekennzeichnet, dass** der Blattspannmechanismus (10) ferner eine Adaptereinrichtung (50) umfasst, die an dem Aufnahmeabschnitt (30) angeordnet ist und wenigstens einen ersten Aufnahmebereich (54) für einen Befestigungsabschnitt (14) eines ersten Sägeblatts (12) mit einer ersten Kontur sowie einen zweiten Aufnahmebereich (56) für einen Befestigungsabschnitt (114) eines zweiten Sägeblatts (112) mit einer zweiten Kontur definiert, wobei die erste Kontur eines Befestigungsabschnitts von der zweiten Kontur unterschiedlich ist.

2. Handgeführte Säge nach Anspruch 1,
**dadurch gekennzeichnet, dass** das Betätigungselement (22) einteilig ausgebildet ist und wenigstens eine Greiffläche (24) aufweist, an der ein Anwender das Betätigungselement (22) greifen kann, um dieses relativ zu dem Aufnahmeabschnitt (30) zu bewegen.

3. Handgeführte Säge nach Anspruch 1 oder 2,
**dadurch gekennzeichnet, dass** das elastische Rückstellelement (26) eine Feder umfasst, welche an dem Verriegelungsglied (40) anzugreifen vermag.

4. Handgeführte Säge nach einem der Ansprüche 2 bis 3,
**dadurch gekennzeichnet, dass** das Betätigungselement (22) aus einem metallischen Werkstoff hergestellt ist und die wenigstens eine Greiffläche (24) eine Strukturierung, beispielsweise in der Art einer Riffelung oder Rändelung, aufweist.

5. Handgeführte Säge nach einem der Ansprüche 1 bis 4,
**dadurch gekennzeichnet, dass** die Adaptereinrichtung (50) eine Auflageplatte (52) umfasst, wobei ein Befestigungsabschnitt (14) mit einer ersten Kontur auf einer Auflageseite(54) der Auflageplatte (52) aufliegen kann, und wobei die Auflageseite (54) eine nutartige Vertiefung (56) aufweist, in die ein Befestigungsabschnitt (114) mit einer zweiten Kontur (112) eingelegt werden kann.

6. Handgeführte Säge nach Anspruch 5,
**dadurch gekennzeichnet, dass** die Kontur der nutartigen Vertiefung (56) wenigstens abschnittsweise im wesentlichen der zweiten Kontur eines Befestigungsabschnitts (114) entspricht.

7. Handgeführte Säge nach Anspruch 5 oder 6,
**dadurch gekennzeichnet, dass** die Auflageplatte (52) in dem Aufnahmeabschnitt (30) aufgenommen ist und mittels wenigstens eines Befestigungsmittels (68) an diesem befestigt ist.

8. Handgeführte Säge nach Anspruch 7,
**dadurch gekennzeichnet, dass** der Aufnahmeabschnitt (30) wenigstens ein korrespondierendes Befestigungsmittel (36) aufweist, welches mit dem wenigstens einen Befestigungsmittel (68) zur Befestigung der Auflageplatte (32) zusammenwirkt.

9. Handgeführte Säge nach Anspruch 8,
**dadurch gekennzeichnet, dass** der Aufnahmeabschnitt (30) als korrespondierendes Befestigungsmittel eine Ausnehmung (36) aufweist, in die das hülsenförmig ausgebildete Befestigungsmittel (68) eingreifen kann.

10. Handgeführte Säge nach einem der Ansprüche 1 bis 9,
**dadurch gekennzeichnet, dass** die Säge eine mittels einer Antriebseinheit angetriebene Spindel (100) umfasst, welche mit dem Aufnahmeabschnitt (30) verbindbar ausgebildet ist.

11. Blattspannmechanismus (10) für eine handgeführte Säge mit den Merkmalen der Ansprüche 1 bis 10.

12. Adaptereinrichtung (50) für einen Blattspannmechanismus (10) einer handgeführten Säge mit den Merkmalen der Ansprüche 1 bis 10, wobei die Adaptereinrichtung an dem Aufnahmeabschnitt (30) des Blattspannmechanismus (10) angeordnet ist und wenigstens einen ersten Aufnahmebereich (52) für den Befestigungsabschnitt (14) eines ersten Sägeblatts (12) mit einer ersten Kontur sowie einen zweiten Aufnahmebereich (56) für den Befestigungsabschnitt (114) eines zweiten Sägeblatts (112) mit einer zweiten Kontur definiert, und wobei die erste Kontur eines Befestigungsabschnitts von der zweiten Kontur unterschiedlich ist.

## Claims

1. Handheld saw comprising a blade clamping mechanism (10) which is configured to attach a saw blade (12; 112) releasably to the saw, wherein the blade clamping mechanism (10) has:
- a receiving portion (30) for receiving the saw blade (12; 112) and connecting it to the saw,
- an actuating unit (20) having an actuating element (22) which is arranged in the region of the receiving portion (30) and is movable relative to the receiving portion (30) between a releasing position and a locking position, and
- a locking member (40) which, as a consequence of the actuating element (22) being moved from its releasing position into its locking position, is moved into an operative position in which the locking member (40) is operatively connected to a saw blade (12) received in the receiving portion (30),
wherein a movement of the actuating element (22) out of its locking position into its releasing position allows the locking member (40) to be returned out of the operative position,
and wherein the actuating unit (20) furthermore comprises an elastic return element (26) which is able to return the locking member (40) out of the operative position when the actuating element (22) is in its releasing position,
**characterized in that** the blade clamping mechanism (10) furthermore comprises an adapter device (50) which is arranged on the receiving portion (30) and defines at least one first receiving region (54) for a fastening portion (14) of a first saw blade (12) having a first contour and defines a second receiving region (56) for a fastening portion (114) of a second saw blade (112) having a second contour, wherein the first contour of a fastening portion is different from the second contour.

2. Handheld saw according to Claim 1,
**characterized in that**
the actuating element (22) is configured in one piece and has at least one gripping surface (24) by way of which the user can grip the actuating element (22) in order to move the latter relative to the receiving portion (30).

3. Handheld saw according to Claim 1 or 2,
**characterized in that** the elastic return element (26) comprises a spring which is able to act on the locking member (40).

4. Handheld saw according to either of Claims 2 and 3,
**characterized in that**
the actuating element (22) is produced from a metal material and the at least one gripping surface (24) has structuring, for example of the fluting or knurling type.

5. Handheld saw according to one of Claims 1 to 4,
**characterized in that**
the adapter device (50) comprises a bearing plate (52), wherein a fastening portion (14) having a first contour can bear against a bearing side (54) of the bearing plate (52), and wherein the bearing side (54) has a groove-like depression (56) into which a fastening portion (114) having a second contour (112) can be introduced.

6. Handheld saw according to Claim 5,
**characterized in that**
at least part of the contour of the groove-like depression (56) corresponds substantially to the second contour of a fastening portion (114).

7. Handheld saw according to Claim 5 or 6,
**characterized in that**
the bearing plate (52) is received in the receiving portion (30) and is fastened thereto by means of at least one fastening means (68).

8. Handheld saw according to Claim 7,
**characterized in that**
the receiving portion (30) has at least one corresponding fastening means (36) which cooperates with the at least one fastening means (68) for fastening the bearing plate (32).

9. Handheld saw according to Claim 8,
**characterized in that**
the receiving portion (30) has, as corresponding fastening means, a recess (36) into which the fastening means (68) of sleeve-like configuration can engage.

10. Handheld saw according to one of Claims 1 to 9,
**characterized in that**
the saw comprises a spindle (100) driven by means of a drive unit, said spindle (100) being configured so as to be connectable to the receiving portion (30).

11. Blade clamping mechanism (10) for a handheld saw having the features of Claims 1 to 10.

12. Adapter device (50) for a blade clamping mechanism (10) of a handheld saw having the features of Claims 1 to 10, wherein the adapter device is arranged on the receiving portion (30) of the blade clamping mechanism (10) and defines at least one first receiving region (52) for the fastening portion (14) of a first saw blade (12) having a first contour and defines a second receiving region (56) for the fastening portion (114) of a second saw blade (112) having a second contour, and wherein the first contour of a fastening portion is different from the second contour.

## Revendications

1. Scie à main comportant un mécanisme de fixation de la lame (10) qui lui est adapté, une lame de scie (12; 112) amovible agencée pour être montée sur la scie, dans laquelle le mécanisme de fixation de la lame (10) comprend :
- une section de réception (30) pour la réception et le couplage de la lame de scie (12; 112) sur la scie,
- une unité d'actionnement (20) comportant un élément d'actionnement (22) qui est disposé dans la zone de la section de réception (30) et peut être placé, relativement à la section de réception (30) entre une position de libération et une position de verrouillage, et
- un élément de verrouillage (40), qui, suite à un déplacement de l'élément d'actionnement (22) passe d'une position de libération par sa position de verrouillage dans une position d'actionnement, dans laquelle l'élément de verrouillage (40) se trouve activement couplé avec une lame de scie (12) prise en charge dans la section de réception (30),
dans laquelle le déplacement de l'élément d'actionnement (22) hors de sa position de verrouillage dans sa position de libération, permet un retour de l'élément de verrouillage (40) hors de la position d'actionnement,
et dans laquelle l'élément d'actionnement (20) comporte en outre un élément élastique de renvoi en arrière (26), qui est en mesure de ramener l'élément de verrouillage (40) hors de la position d'actionnement, lorsque l'élément d'actionnement (22) se trouve dans da position de libération,
**caractérisée en ce que**,
le mécanisme de la lame de scie (10) comporte par ailleurs une installation d'adaptation (50) qui est disposée sur la section de réception (30) et qui définit au moins un premier secteur de réception (54) pour un premier secteur de fixation (14) d'une première lame de scie (12), avec un premier contour, ainsi qu'un second secteur de réception (56) pour un secteur de fixation (114) d'une seconde lame de scie (112), avec un second contour, dans lequel le premier contour d'un secteur de fixation est différent du second contour.

2. Scie à main selon la revendication 1,
**caractérisée en ce que**
l'élément d'actionnement (22) est réalisé d'une pièce et présente au moins une surface de préhension (24), sur laquelle un utilisateur peut saisir l'élément d'actionnement (22) pour le déplacer relativement vers la section de réception (30).

3. Scie à main selon les revendications 1 ou 2, **caractérisée en ce que** l'élément élastique de renvoi en arrière (26) comporte un ressort qui est agencé pour contacter l'élément de verrouillage (40).

4. Scie à main selon l'une des revendications 2 à 3,
**caractérisée en ce que**
l'élément d'actionnement (22) est réalisé en un matériau métallique et ladite au moins une surface de préhension (24) présente une structuration, par exemple sous la forme d'un rainurage ou d'un cannelage.

5. Scie à main selon l'une des revendications 1 à 4,
**caractérisée en ce que**
l'adaptation (50) comporte une plaque d'appui (52), dans lequel un secteur de fixation (14) avec un premier contour peut être déposé sur un côté d'appui (54) de la plaque d'appui (52) et dans lequel le côté d'appui (54) comporte une creusure en forme de gorge (56) dans laquelle un secteur de fixation (114) peut être inséré avec un second contour (112).

6. Scie à main selon la revendication 5,
**caractérisée en ce que**
le contour de la creusure en forme de gorge (56), correspond au moins partiellement au deuxième contour d'un secteur de fixation (114).

7. Scie à main selon les revendications 5 ou 6,
**caractérisée en ce que**
la plaque d'appui (52) est engagée dans la section de réception (30) et qu'elle est fixée à cette dernière par au moins un moyen de fixation (68).

8. Scie à main selon la revendication 7,
**caractérisée en ce que**
la section de réception (30) présente au moins un élément de fixation (36) correspondant, qui agit en coopération dudit au moins un moyen de fixation (68) pour fixer la plaque d'appui (32).

9. Scie à main selon la revendication 8,
**caractérisée en ce que**
la section de réception (30) est agencée pour agripper, à titre de moyen de fixation correspondant, une creusure (36) dans laquelle le moyen de fixation (68) en forme de douille peut être emboîtée.

10. Scie à main selon l'une des revendications 1 à 9,
**caractérisée en ce que**
la scie comprend un arbre entraîné (100) par une unité d'entraînement, lequel est agencé pour être lié à la section de réception (30).

11. Mécanisme de tension de lame de scie (10) pour une scie manuelle selon les revendications 1 à 10.

12. Installation d'adaptation (50) pour un mécanisme de tension de lame de scie (10) pour une scie manuelle avec les caractéristiques des revendications 1 à 10, dans laquelle l'installation d'adaptation est montée sur la section de réception (30) du mécanisme de tension de lame de scie (10) et au moins une première plaque d'appui (52) pour le secteur de fixation (14) d'une première lame de scie (12), avec un premier contour ainsi qu'une seconde section de réception (56) pour le secteur de fixation (114) d'une seconde lame de scie (112) définissant un second contour, et dans lequel le premier contour d'un secteur de fixation est différent du second contour.
